# EUROPEAN PATENT APPLICATION

(11) **EP 1 905 552 A1**
(43) Date of publication of application: **02.04.2008**
(21) Application number: 06121520.8
(22) Date of filing: 29.09.2006
(51) Int. Cl.: B25J 19/00, H02P 3/16

(54) **A robot with at least two separate brake devices and a method of controlling such a robot**

(71) Applicant: ABB RESEARCH LTD., 8050 Zürich (CH)
(72) Inventor: Bosga, Sjoerd, 723 37 Västeras (SE)
(74) Representative: Kock, Ina

(57) **Abstract**

A robot comprising: at least two parts (1, 2, 3) movably arranged in relation to each other with at least one degree of freedom; drive means (4, 5) arranged to accomplish at least two separate movements between said parts (1, 2, 3); at least two separate brake devices (6, 7) provided to counteract a respective of said at least two separate movements; and a control unit (8) operably connected with said brake devices (6, 7) and arranged to control the activation thereof. The control unit (8) is arranged to activate at least one of said brake devices (6, 7), while leaving at least one other of said brake devices (6, 7) inactivated.

## Description

### TECHNICAL FIELD

The present invention relates to a robot comprising: at least two parts movably arranged in relation to each other with at least one degree of freedom; drive means arranged to accomplish at least two separate movements between said parts; at least two separate brake devices provided to counteract a respective of said at least two separate movements; and a control unit operably connected with said brake devices and arranged to control the activation thereof.

The invention also relates to a method of controlling such a robot.

Preferably, the robot is an industrial robot.

"Movement", as referred to herein, includes any kind of movement of one part in relation to an adjacent part to which said part is connected, and may include pivotation, rotation, sliding etc.. Multiple degrees of freedom may exist between individual parts of the robot, whereby, for example, both pivotation and rotation of one part in relation to an adjacent part may be provided for. "Separate movements", as referred to herein, may include movements of the same kind or different kind between different pairs of parts, or movements of different kind between two parts of one single pair of parts.

Typically, said parts of the robot comprise the arms thereof, that are pivotally and/or rotationally arranged in relation to each other by means of joints connecting them. Normally, the drive means are electric motors, separate motors being dedicated for the execution of separate movements.

Normally, the control unit used for controlling the activation of the drive means and the brake devices of the robot is a processor or the like provided with a software that is decisive for said control and for the implementation of different operative functions of the robot. Preferably, said software comprises motion control algorithms for the control of the robot.

### BACKGROUND OF THE INVENTION

An industrial robot comprises a number of robot parts, which are movable relative to each other. Movements are normally accomplished by means of electric motors. The motion is accelerated and retarded during one working cycle, for example by the regulation of the speed of each motor. Retardation during normal use currently takes place solely by the use of motors. Each joint is equipped with a brake with sufficient braking power or torque for emergency braking with or without the aid of motors and computers. The brakes also have the task of holding the load in a static position.

The action of a brake may be either dynamic or static. A dynamic brake produces a dynamic retardation torque. A static or holding brake produces a static torque. The functions of a dynamic brake and a holding brake may be obtained as two functions from one and the same component.

In modem robots, the electric motor and converter dimensioning for providing a hold torque (torque at zero motor speed) is sometimes problematic. Thermal dimensioning of the motor and the converter will normally require the specified hold torque to be lower than the peak torque of the motor while in motion. This is due to the fact that at standstill, the current required to produce torque has in one motor winding and one converter leg higher intensity than in the others.

Typically, every robot servo motor is equipped with a (built in) brake, which serves to hold the robot in position in case of an emergency stop or power loss. Normally, all brakes are released simultaneously, and remain so as long as the motors are being controlled. A known exception is that brakes may be individually released for manual moving of the robot while the motors are not powered.

### THE OBJECT OF THE INVENTION

A main object of the invention is to provide a robot as initially defined, which presents a high degree of operational flexibility, in particular a robot the brake devices of which are operated in a way that promotes operational flexibility.

It is a further object of the invention to provide a robot the design and operation of which promotes the use of drive means, like electric motors and converters connected thereto, that need not be dimensioned for as high torques as corresponding drive means of prior art.

It is a still further object of the invention to provide a robot that, during normal operation, may present a larger holding torque than the motor holding torque alone, thus a stronger holding.

It is a still further object to provide a robot the design and operation of which will result in a reduced thermal stress of the drive means, typically an electric motor and/or a converter connected thereto, in connection to holding situations.

### SUMMARY OF THE INVENTION

The main object of the invention is achieved by means of the initially defined industrial robot, characterised in that the control unit is arranged to activate at least one of said brake devices, while leaving at least one other of said brake devices inactivated. Thereby, it will be possible to use one or more brake devices as an active part in the control of the robot. The activated brake device may, possibly, complement or even fully replace the dynamic braking torque or holding torque of a specific drive means during operation, thereby becoming involved in the on-going operation of the robot in a way not experienced before in this technical field.

Preferably, the control unit is arranged to control the activation of each of said brake devices separately. In other words, the control unit is arranged, i.e. programmed, to control the operation of the brake devices individually, and possibly independent of how the other brake devices are operated (activated or inactivated).

According to one embodiment the control unit is arranged to activate said drive means for the accomplishment of at least one movement, and to, simultaneously, activate at least one of said brake devices in order counteract another movement.

According to a further embodiment, the control unit is arranged to activate said drive means during activation of at least one of the brake devices, in order to let the drive means provide a torque that supplements the braking torque of said activated brake device. Thereby, a higher total torque, and a stronger braking effect, can be achieved, either while holding a link in a holding position or during retardation of said movement.

Preferably, the control unit is arranged to activate said drive means upon detection of a state in which the torque of the activated brake device alone is insufficient to prevent the movement to be prevented by said brake device. Thereby, a higher total torque may be accomplished than in other cases according to prior art.

In order to provide an information to the control unit, based on which the control unit may control the drive means accordingly, the robot should comprise a sensor means provided to detect said state.

According to a preferred embodiment, at least one of said brake devices forms a holding brake, and the control unit is arranged to activate the holding brake when, as a result of a foregoing braking by means of the drive means, the movement to be prevented by means of said hold brake has substantially, preferably absolutely, ceased. Thereby, during ongoing operation, when a certain motion is to be inhibited (and other motions of the robot may still be performed), a holding brake will assist the drive means associated thereto in temporarily holding the link or axis of the robot associated thereto.

Preferably, during activation of at least one of said brake devices, the control unit is arranged to control the drive means such that the movement to be prevented by means of said at least one activated brake device is actually prevented. Thereby, the operation of the drive means will be such that it is always guaranteed that, during activation of a certain brake device, the movement thereby assumed to be prevented will also be prevented in reality.

Normally, the drive means comprises at least two drive means, each one of which is dedicated for the accomplishment of a respective of said at least two separate movements. In other words, the drive means and the brake devices operate in pairs consisting of a separate drive means and a brake device dedicated to said drive means, and each such pair is controlled and activated separately and independently of the other pairs.

Preferably, the drive means comprises at least one electric motor, and that, during activation of at least one of said brake devices, the control unit is arranged to control the motor associated thereto such that the speed of the movable part of said motor is zero.

Alternatively, or as a complement, the drive means comprises at least one electric motor, and that, during activation of at least one of said brake devices, the control unit is arranged to control the motor associated thereto such that the position of the movable part of said motor is constant.

According to one embodiment, said parts of the robot comprise a first part, a second part and a third part, wherein said at least two movements include a first movement between the first part and the second part and a second movement between the second part and the third part. Both movements may, for example, be a pivotation, around different joints.

According to a further embodiment, said parts comprise a first part and a second part that are movable in relation to each other with two degrees of freedom, wherein said at least two movements include a first movement between the first part and the second part and a separate second movement between the first part and the second part. One movement may, for example, be a pivotation, while the other movement is a rotation, for example around perpendicular geometric axes of a joint.

The object of the invention is also achieved by means of the initially defined method, characterised in at least one of said brake devices is activated while at least one other of said brake devices is left inactivated.

Preferably, each of said brake devices are activated separately.

According to one embodiment, said drive means are activated for the accomplishment of at least one movement, and, simultaneously, at least one of said brake devices is activated in order counteract another movement.

It is preferred that said drive means are activated during activation of at least one of the brake devices, in order to let the drive means provide a torque that supplements the braking torque of said activated brake device.

According to one embodiment, said drive means are activated upon detection of a state in which the torque of the activated brake device alone is insufficient to prevent the movement to be prevented by said brake device.

Preferably, at least one of said brake devices acts as a holding brake, and the hold brake is activated when, as a result of a foregoing braking by means of the drive means, the movement to be prevented by means of said holding brake has ceased.

According to one embodiment, during activation of at least one of said brake devices, the drive means may be activated such that the movement to be prevented by means of said at least one activated brake device is actually prevented.

According to a further embodiment, the drive means comprises at least one electric motor, and, during activation of at least one of said brake devices, the motor associated thereto is controlled such that the speed of the movable part of said motor is zero.

Alternatively, the drive means comprise at least one electric motor, and, during activation of at least one of said brake devices, the motor associated thereto is controlled such that the position of the movable part of said motor is constant.

Preferably, the drive means and the brake devices operate in pairs consisting of a separate drive means and a brake device dedicated to said drive means, and each such pair is controlled and activated separately and independently of the other pairs.

Preferably, said at least one brake device is activated during normal operation of the robot, during a temporary holding sequence. This is to be compared to the different case in which the brake is activated as a result of an emergency situation, for example a loss of power, by which the positions of the arms of a robot have to be secured. Here, instead, further components of the robot are supposed to be activated and operating while one ore more brake devices are used for providing a holding torque until now normally provided by the drive means during normal operation.

The invention also relates to a computer program product stored on a readable medium, characterised in that it comprises instructions for the implementation of the method according to the invention on a robot.

Further features and advantages of the present invention will be disclosed in the following detailed description and in the appended claims.

### BRIEF DESCRIPTION OF THE DRAWINGS

Preferred embodiments of the invention will now be described more in detail, by way of example, with reference to the annexed drawing, on which:
Fig. 1 is a schematic representation of a robot, according to a first embodiment,
Fig. 2 is a schematic representation of a robot, according to a second embodiment,
Fig. 3 is a further schematic representation of a robot according to the invention,
Fig. 4. is block diagram showing essential steps of the method of the invention,
Fig. 5 is a block diagram showing further essential steps of the method of the invention, and
Fig. 6 is a block diagram showing further essential steps of the method of the invention.

### DETAILED DESCRIPTION OF THE INVENTION

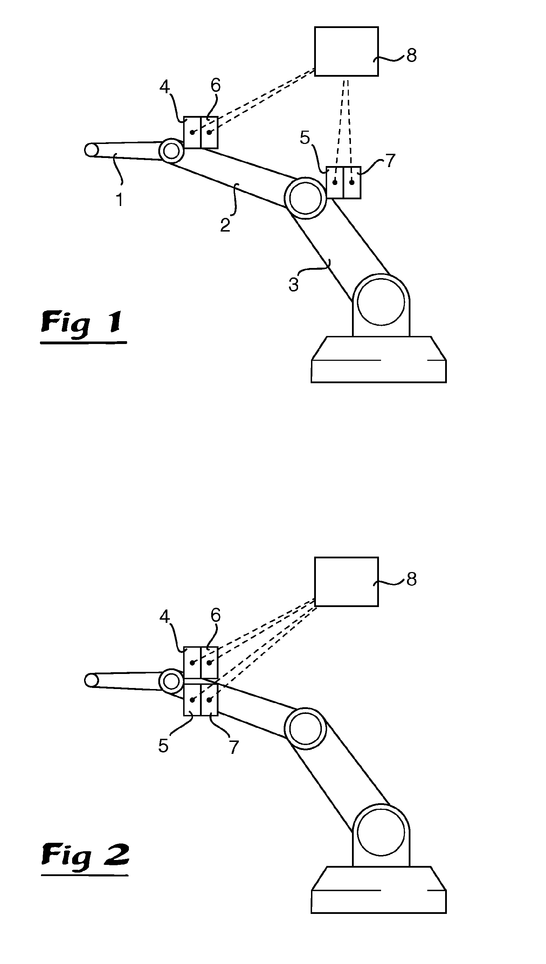

Fig. 1 shows a first embodiment of a robot according to the invention. The robot comprises a plurality of parts formed by consecutive arms 1, 2, 3, arranged in a series. Each of said arms 1, 2, 3 is movable, e.g. with at least one degree of freedom in relation to an adjacent arm 1, 2, 3. It should, however, be understood that the invention is not restricted to the number of parts, i.e. arms, shown in fig. 1, but that it may as well include other numbers of such parts.

Drive means comprising electric motors 4, 5 are provided for the purpose of implementing said movements. Normally, there is provided one separate motor 4, 5 for the execution of each separate movement. The motor 4, 5 may be located close to or more remote from the joint by which said movement is to take place. There may also be a gear unit (not shown) connected between the motor 4, 5 and the arm 1, 2 driven by the motor 4, 5, for the transmission of a suitable rotational speed and torque to said moving arm.

There are also provided brake devices 6, 7 for the purpose of providing a dynamic and/or holding brake function during activation thereof, either as a result of an emergency situation or during normal operation. Each brake device 6, 7 is arranged for the purpose of providing a braking torque that prevents or at least aims to prevent a specific movement to which the brake device 6, 7 is associated. The brake devices 6, 7 may be provided by or on the motors 4, 5 in order to execute their braking function directly on the latter, or be provided at the relevant joint, in order to execute the braking function on said joint. It should be noted that the invention is not restricted to embodiments in which a single brake device only counteracts one movement, but also includes that one single brake device might be arranged for the purpose of counteracting more than one movement, e.g. both a rotation and a pivotation at one joint or link.

If, for example, the brake devices 6, 7 are aimed to provide both dynamic and holding functionality, they may have a design similar to the one disclosed in patent document WO0162449, of the applicant. Such a design is characterised in that the brake device comprises a first body with a first surface, and a second body with a second surface, and that a medium is arranged between said surfaces, which medium transfers a force between said bodies when in an active condition, and that the brake device comprises a magnetic arrangement comprising at least one permanent magnet for the purpose of activating said medium. A current-carrying coil the magnetic field of which is variable may also form part of said magnetic arrangement. The operation of the magnetic arrangement is controlled by means of a control unit, and by variation of the strength of the magnetic field generated by the magnetic arrangement and acting on said medium, the braking effect, i.e. the torque provided by the brake device, may be controlled. One of said bodies may be a moving part of the drive means, for example a shaft or a mantle surface of a rotating part of an electric motor. However, the present invention is not restricted to such a brake device design, in particular in those cases when the brake device is primarily aimed for the provision of a holding torque and emergency braking, which might be the case in many practical applications.

Further, the inventive robot comprises a control unit, for example a computer, processor, or the like, adapted to control the operation of the drive means 4, 5 and the brake devices 6, 7. The control unit 8 may be arranged close to or remote from the main body of the robot. It may be provided as separate parts located remote from each other but co-operating in order to perform the necessary control functions. It is operably connected with the components the operation of which it is aimed to control, either by wire or wireless. Preferably, the control unit 8 comprises software that comprises motion control algorithms for the control of drive means 4, 5, brake devices 6, 7 and other components the operation of which is relevant for the function of the robot.

According to the invention, the control unit 8 is provided with a program or with control features that will permit individual control of separate drive means 4, 5 as well as individual control of separate brake devices 6, 7. Normally, units comprising one drive means 4, 5 and an associated brake device 6, 7 are provided for each movement to be performed by the different arms 1, 2, 3 of the robot. Preferably, the operation of each such unit 4, 6; 5, 7 is separately controlled by the control unit 8. It might also be preferred that, for each such unit 4, 6; 5, 7 such operation is controlled independent of the operation of the other unit or units.

Fig. 2 shows an example of a robot one arm 1 of which is movable with at least two degrees of freedom in relation to an adjacent arm 2 to which it is connected through a joint. Each degree of freedom corresponds to a separate movement of said arm 1, e.g. a pivotation and a rotation respectively. For each movement there is arranged a separate drive means 4, 5 and a separate brake device. Accordingly, fig. 2 shows the possibility of implementing the invention on only one joint of a robot. However, in practice, industrial robots will most probably present a larger number of arms that are movable in relation to each other by means of drive means, with associated brake devices, wherein some arms will operate with only one degree of freedom while others will operate with more than one degree of freedom.

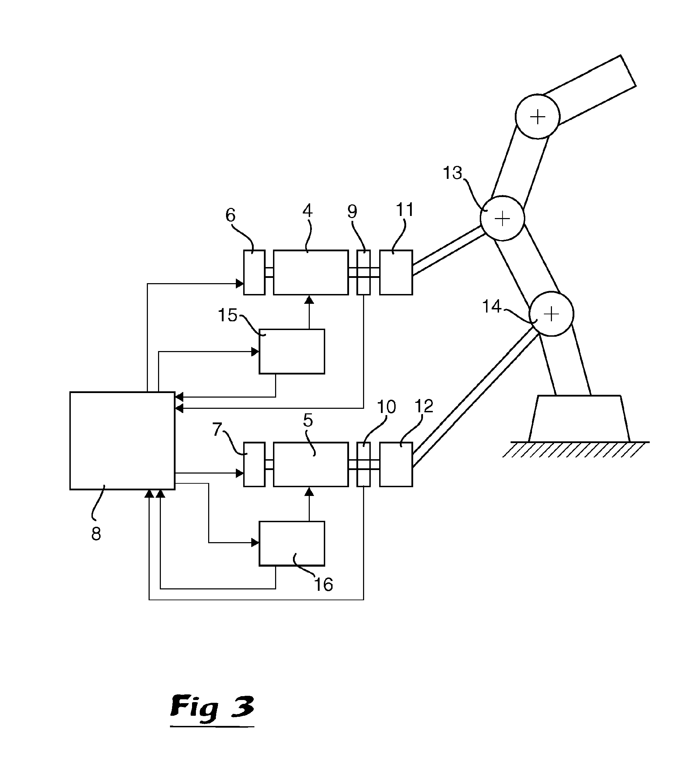

Fig. 3 is a further, somewhat more detailed, illustration of a robot according to the invention, corresponding to fig. 1. Further to what is shown in figs. 1 and 2, fig. 3 also shows the existence of a position sensor 9, 10, by means of which the position of the movable part of the motor 4, 5 is sensed and transmitted to the control unit 8. Further it shows the existence of a gear 11, 12 as a part of the drive line from the motor 4, 5 to the arm 1, 2, or, more precisely, to the joint 13, 14 to be driven thereby, and a converter 15, 16 that might by used for feeding the individual motors 4, 5 with electric power of a certain voltage.

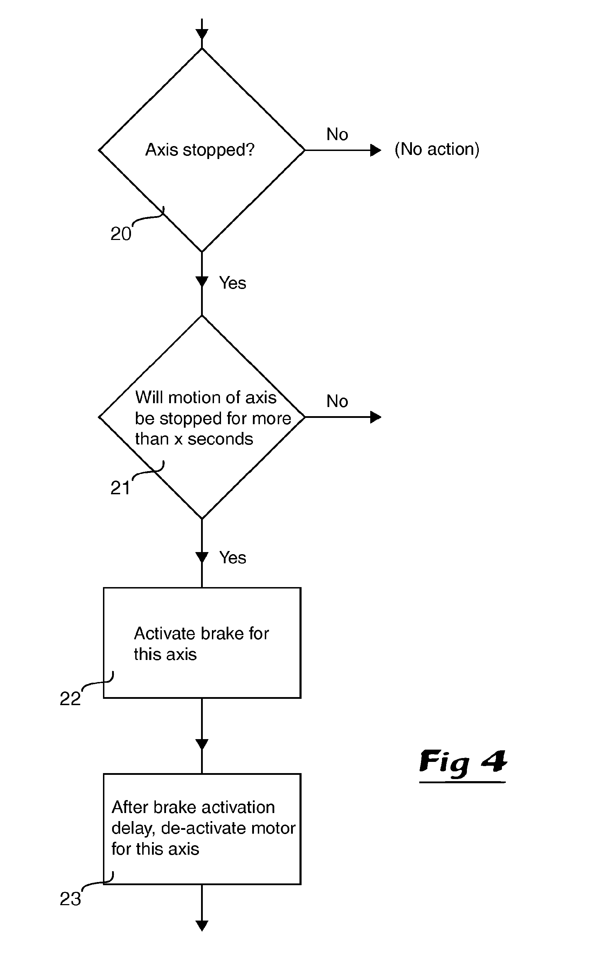

Figs. 4-6 are block diagrams showing possible control routines to be followed by a control unit upon controlling an operative unit consisting of a drive means 4, 5 and a brake device 6, 7 dedicated for a predetermined movement of one of said arms 1, 2 of the robot shown in figs. 1-3. Here, the basic principle is that the dynamic braking, i.e. the braking in order to retard the motion of the relevant arm 1, 2 is performed solely by means of the drive means 4, 5. It should be emphasized that the braking is not an emergency braking, but a normal retardation of a predetermined movement of a arm 1, 2 during normal operation of the industrial robot.

Fig. 4 shows the essential steps to be taken during activation of a brake device 6, 7 for holding one of said arms 1, 2. In a first step, indicated in box 20, it is confirmed whether the predetermined movement of said arm 1, 2 has ceased or not. If not, the operation, which might be a braking, of the drive means continues without any activation of the brake device 6, 7. However, if the relevant movement has ceased, the question is whether the motion will be stopped for a duration of time exceeding a predetermined period of time, see box 21. The answer to this question will most probably be found in the control algorithm of the control unit 8. If the duration of the stop exceeds the predetermined value, the brake device 6, 7 is to be activated, box 22. If not, the holding torque is provided only by means of the drive means 4, 5.

Though the brake device 6, 7 is activated, the associated drive means 4, 5 should not be immediately de-activated. Instead, as shown in box 23, it is preferred that the associated drive means 4, 5 remains activated during a predetermined duration of time counted from the moment of activation of the associated brake device 6, 7, and then gets de-activated. Said duration of time, or delay, before the de-activation is, naturally, shorter than the predetermined duration of time for stopping/holding. Optionally, the drive means 4, 5 may remain active, but controlled to assist or at least not counteract the relevant brake device 6, 7.

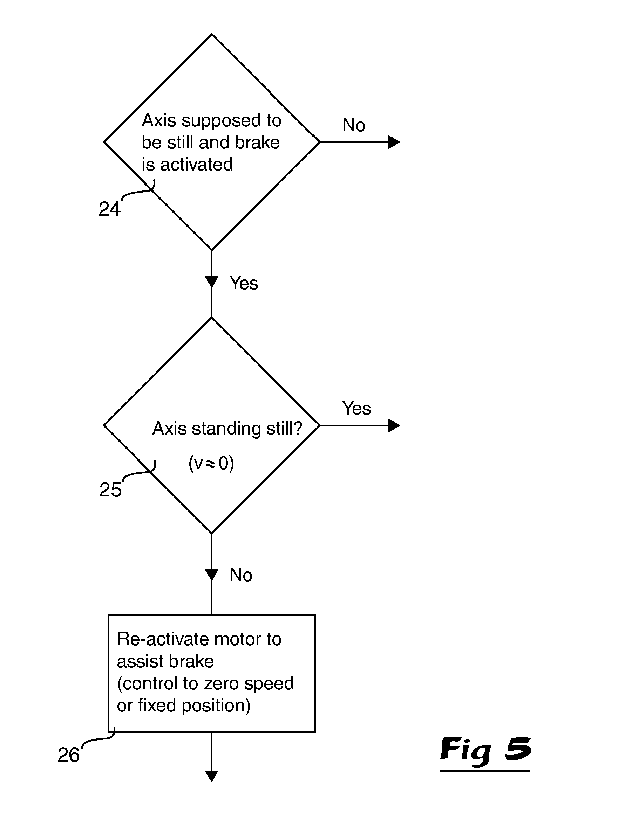

Fig. 5 shows essential steps to be taken when, during a stop by which the brake device 6, 7 has been activated, the associated drive means 4, 5 has been de-activated, and there is a chance that the holding torque provided by the brake device 6, 7 might not be sufficient for holding, or preventing the relevant movement. First, as seen in box 24, the question is if the relevant arm is supposed to be non-moving. It is also established whether the relevant brake device is activated or not. If the answer to both questions is yes, it is established whether the relevant arm is, in reality, non-moving, box 25 (always with regard to the predetermined movement. It should be understood that the arm might still be moving, but due to movements performed by other axes of the robot.). If the relevant movement is detected, the relevant drive means 4, 5 is re-activated, box 26, to assist the brake device 6, 7, while controlled to zero speed or a fixed position. If the drive means was still active, these steps might be dispensed with. Then, instead, it might suffice with only controlling the speed of the drive means/motor to zero or controlling its position (fixed).

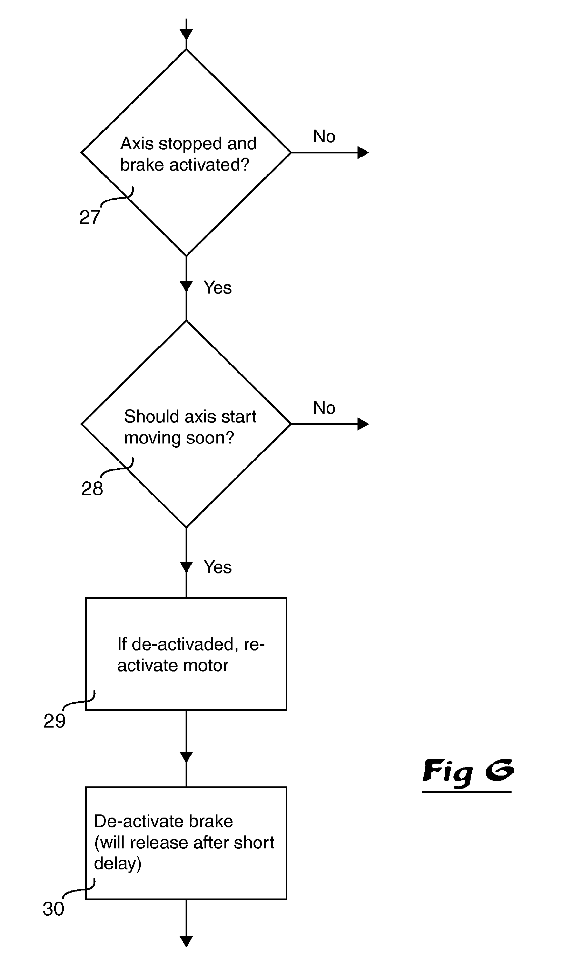

Fig. 6 shows essential steps to be taken when the hold sequence, the stop, by which the brake device 6,7 has been activated, is ended. First, it is determined whether the movement of the relevant arm 1, 2 is stopped and the brake device 6, 7 is activated, box 27. If the answer is yes, it is determined whether the movement is to start again, box 28, for example if a predetermined rotation or pivoting of an arm 1, 2 is to be performed (in any out of two opposite, possible directions). If the answer is yes, the drive means, if de-activated, is re-activated, box 29, such that a torque that accomplishes an acceleration of the relevant arm 1, 2 may be provided by said drive means 4, 5. This step is the followed by a step, box 30, in which relevant brake device 6, 7 is de-activated, preferably after a predetermined period of time after activation of the drive means 4, 5.

Further, it should be mentioned that drive means, as used in this context, primarily includes a motor, such as an electric motor, possibly connected to a converter connected and to a transmission between the motor and the part or arm of a robot to be driven by said motor. However, different drive means may have certain commonly shared parts. For example, a plurality of motors may be fed by one and the same converter. However, the invention does not rule out the possibility of including components such as converters, gears etc. as parts of the drive means.

It should be understood that the above description of preferred embodiments has been made in order exemplify the invention, and that alternative solutions will be obvious for a person skilled in the art, however without departing from the scope of the invention as defined in the appended claims supported by the description and the drawings.

For example, the brake devices may be either linear or rotational brakes. Likewise, the motors used as drive means may be either linear or rotational motors.

## Claims

1. A robot comprising
- at least two parts (1, 2, 3) movably arranged in relation to each other with at least one degree of freedom,
- drive means (4, 5) arranged to accomplish at least two separate movements between said parts (1, 2, 3),
- at least two separate brake devices (6, 7) provided to counteract a respective of said at least two separate movements, and
- a control unit (8) operably connected with said brake devices (6, 7) and arranged to control the activation thereof,
**characterised in that** the control unit (8) is arranged to activate at least one of said brake devices (6, 7), while leaving at least one other of said brake devices (6, 7) inactivated.

2. A robot according to claim 1, **characterised in that** the control unit (8) is arranged to control the activation of each of said brake devices (6, 7) separately.

3. A robot according to claim 1 or 2, **characterised in that** the control unit (8) is arranged to activate said drive means (4, 5) for the accomplishment of at least one movement, and to, simultaneously, activate at least one of said brake devices (6, 7) in order counteract another movement.

4. A robot according to any one of claims 1-3, **characterised in that** the control unit (8) is arranged to activate said drive means (4, 5) during activation of at least one of the brake devices (6, 7), in order to let the drive means (4, 5) provide a torque that supplements the braking torque of said activated brake device (6, 7).

5. A robot according to claim 4, **characterised in that** the control unit (8) is arranged to activate said drive means (4, 5) upon detection of a state in which the torque of activated brake device (6, 7) alone is insufficient to prevent the movement to be prevented by said brake device (6, 7).

6. A robot according to claim 5, **characterised in that** it comprises a sensor means provided to detect said state.

7. A robot according to any one of claims 1-6, **characterised in that** at least one of said brake devices (6, 7) forms a holding brake, and the control unit (8) is arranged to activate the holding brake (6, 7) when, as a result of a foregoing braking by means of the drive means (4, 5), the movement to be prevented by means of said hold brake (6, 7) has substantially ceased.

8. A robot according to any one of claims 1-7, **characterised in that**, during activation of at least one of said brake devices (6, 7), the control unit (8) is arranged to control the drive means (4, 5) such that the movement to be prevented by means of said at least one activated brake device (6, 7) actually is prevented.

9. A robot according to any one of claims 1-8, **characterised in that** said drive means (4, 5) comprise at least two drive means (4, 5), each one of which is dedicated for the accomplishment of a respective of said at least two separate movements.

10. A robot according to any of claims 1-9, **characterised in that**, the drive means comprises at least one electric motor, and that, during activation of at least one of said brake devices (6, 7), the control unit (8) is arranged to control the motor (4, 5) associated thereto such that the speed of the movable part of said motor is zero.

11. A robot according to any of claims 1-10, **characterised in that** the drive means comprises at least one electric motor, and that, during activation of at least one of said brake devices (6, 7), the control unit (8) is arranged to control the motor (4, 5) associated thereto such that the position of the movable part of said motor is constant.

12. A robot according to any one of claims 1-11, **characterised in that** said parts (1, 2, 3) comprise a first part (1), a second part (2) and a third part (3), wherein said at least two movements include a first movement between the first part (1) and the second part (2) and a second movement between the second part (2) and the third part (3).

13. A robot according to any one of claims 1-12, **characterised in that** said parts comprise a first part (1) and a second part (2) that are movable in relation to each other with two degrees of freedom, wherein said at least two movements include a first movement between the first part (1) and the second part (2) and a separate second movement between the first part (1) and the second part (2).

14. A method of controlling a robot comprising
- at least two parts (1, 2, 3) movably arranged in relation to each other with at least one degree of freedom,
- drive means (4, 5) arranged to accomplish at least two separate movements between said parts (1, 2, 3),
- at least two separate brake devices (6, 7) provided to counteract a respective of said two separate movements, and
- a control unit (8) operably connected with said brake devices (6, 7) and arranged to control the activation thereof, **characterised in that** at least one of said brake devices (6, 7) is activated while at least one other of said brake devices (6, 7) is left inactivated.

15. A method according to claim 14, **characterised in that** each of said brake devices (6, 7) are activated separately.

16. A method according to claim 14 or 15, **characterised in that** said drive means (4, 5) are activated for the accomplishment of at least one movement, and, simultaneously, at least one of said brake devices is activated in order counteract another movement.

17. A method according to any one of claims 14-16, **characterised in that** said drive means (4, 5) are activated during activation of at least one of the brake devices (6, 7), in order to let the drive means (4, 5) provide a torque that supplements the braking torque of said activated brake device (6, 7).

18. A method according to claim 17, **characterised in that** said drive means (4, 5) are activated upon detection of a state in which the torque of the activated brake device (4, 5) alone is insufficient to prevent the movement to be prevented by said brake device (6, 7).

19. A method according to any one of claims 14-18, **characterised in that** at least one of said brake devices (6, 7) acts as a holding brake, and that the holding brake (6, 7) is activated when, as a result of a foregoing braking by means of the drive means (4, 5), the movement to be prevented by means of said hold brake (6, 7) has substantially ceased.

20. A method according to any one of claims 14-19, **characterised in that**, during activation of at least one of said brake devices (6, 7), the drive means (4, 5) are activated such that the movement to be prevented by means of said at least one activated brake device (6, 7) is actually prevented.

21. A method according to any one of claims 14-20, **characterised in that** the drive means (4, 5) comprises at least one electric motor, and that, during activation of at least one of said brake devices (6, 7), the motor (4, 5) associated thereto is controlled such that the speed of the movable part of said motor is zero.

22. A method according to any one of claims 14-21, **characterised in that** the drive means (4, 5) comprise at least one electric motor, and that, during activation of at least one of said brake devices (6, 7), the motor (4, 5) associated thereto is controlled such that the position of the movable part of said motor is constant.

23. A method according to any one of claims 14-22, **characterised in that** the drive means (4, 5) and the brake devices (6, 7) operate in pairs consisting of a separate drive means and a brake device dedicated to said drive means, and that each such pair is controlled and activated separately and independently of the other pairs.

24. A method according to any one of claims 14-23, **characterised in that** said at least one brake device is activated during normal operation of the robot, during a temporary holding sequence.

25. A computer program product stored on a readable medium, **characterised in that** it comprises instructions for the implementation of the method according to any one of claims 14-24 on a robot.
